# EUROPEAN PATENT SPECIFICATION

(11) **EP 3 047 992 B1**
(45) Date of publication and mention of the grant of the patent: **17.06.2020**
(21) Application number: 16151785.9
(22) Date of filing: 19.01.2016
(51) Int. Cl.: B60J 10/265, B60R 13/04, B60J 10/70, B60J 10/78

(54) **VEHICLE GLAZING**
FAHRZEUGVERGLASUNG
VITRAGE DE VÉHICULE

(30) Priority: 19.01.2015 GB 201500883
(43) Date of publication of application: 27.07.2016
(73) Proprietor: Pilkington Group Limited, Lathom Nr. Ormskirk Lancashire L40 5UF (GB)
(72) Inventor: RADUCKI, Slawomir, 74369 Loechgau (DE); STÖLTING, Hermann, 55218 Ingelheim (DE)
(74) Representative: Pettet, Nicholas Edward

(56) References cited:
- WO-A1-2011/089188
- DE-U1-202010 013 082
- FR-A1- 2 965 229
- US-B1- 6 546 683

## Description

The present invention relates to vehicle glazings on which trims may be mounted, and to methods of manufacturing such vehicle glazings.

Vehicle manufacturers wish to manufacture attractive vehicles, especially cars, since the aesthetic qualities of a car are important for commercial success. A number of features contribute to the overall appearance of a vehicle, one of which is the trim associated with the vehicle bodywork. In particular, decorative trim may be provided on doors and windows, and is usually black or silver in colour. A finisher is an item of trim which may be mounted on a profile, other trim or on a glazing. Finishers may be made of metal, with a bright (i.e. silver) finish such as chrome-plating, but more usually they comprise plastic strips with a bright finish, possibly a metallised finish. Such finishers may be provided on fixed (i.e. non-opening) windows or opening windows. They are often added to fixed windows by being mounted on the glazing itself, rather than on the body of the vehicle, whereas trims for openable glazings are generally provided on the vehicle door or body.

A vehicle glazing comprises a pane of glazing material, such as glass, and associated components such as glazing profiles which are usually bonded to the glass. A glazing profile is a frame-like component made from resilient polymer material which is moulded or extruded. Glazing profiles have generally replaced weather-strips, gaskets and other sealing strips. The glazing profile is normally bonded to the pane of glass, usually extending around all or part of the periphery of the pane. The glazing profile fulfils several roles; it acts as a seal and spacer between the pane of glazing material and the vehicle bodywork, providing a controlled transition between glass and bodywork. It serves as a bed or foundation for adhesive, and may also control the position and spread of the adhesive. It may further have water management features. One technique for providing a glazing profile is to mould it *in situ* on the glass, which is known as edge encapsulation, or just "encapsulation" for brevity. In this technique, the glass is placed in an injection mould with its edge protruding into the moulding cavity, and then the polymer material is injected in liquid form, flowing into intimate contact with the glass before setting or curing to form a glazing profile. The glazing profile is bonded to the glass by virtue of being moulded in situ on the glass.

Automotive glazings, such as windscreens and backlights, are typically printed with a solid band of ceramic ink around the periphery of the glazing, known as an obscuration band, which appears as a black or dark-coloured band around the edge of the glass. The obscuration band covers the adhesive on the glazing, and is both aesthetic and functional. Not only is the adhesive hidden from view, but degradation by ultraviolet (UV) light is also prevented.

Trim can be mounted on, or bonded to, a glazing in various ways. For example, when the glazing is encapsulated by a polymer frame (i.e. a glazing profile) around its periphery, the trim may be attached via the polymer frame. Alternatively, the trim may be bonded directly to the glazing by an adhesive along its length. One particularly convenient form in which an adhesive fixing may be made is by use of adhesive tape to bond the trim on the glazing. A further possibility is that the trim may be clipped to the edge of the glazing, either directly, or via a holder that is bonded to the glazing.

DE 20 2010 013 082 U1 discloses a pane unit for a vehicle window, the pane unit comprising a first pane with a frame and a guide web for guiding a second pane which is movable up and down. The frame of the first pane has a multi-part frame profile with at least one secondary part as a soft component and engages on a margin of the pane.

GB 2 219 338 A discloses a vehicle windscreen moulding comprising a head, a leg and auxiliary portions. The moulding receives a glass pane and the auxiliary portions hold it securely in position, and also form a groove for guiding rainwater. The head may be adapted to be exposed.

US-B-6,546,683 relates to a window unit for a vehicle with an integrally formed frame and with retaining devices for an add-on part.

EP-B-2 230 118 relates to a vehicle glazing having a trim mounted thereon and to a means of attachment of a trim to a glazing profile. The means of attachment includes a rigid insert embedded in the glazing profile. The insert has at least one aperture by which the insert is engaged by at least one projection on the trim.

WO-A-2011/089 188 discloses a pane unit, in particular for motor vehicles, comprising a pane, a frame and a decorative trim that can be fastened to the frame. At least one insert is provided in the fastening region of the frame, the insert being integrally moulded into the frame so that the insert is wholly inside the encapsulation. Such an arrangement, with the trim engagement apertures of the insert being inside the encapsulation, requires an access channel to be provided so that the fastening element of the decorative trim can reach the apertures and be pushed through them.

WO-A-2014/049 256 discloses a glazing comprising at least one profiled seal portion, at least one attached component such as a trim, and at least one fixing element for fixing the attached component to the profiled seal portion, the attached component having an interior face comprising retaining flanges.

One difficulty with bonding or clipping a trim to the edge of a glazing is ensuring that the trim and its fixing are able to remain adhered to the glazing in normal use. This is a particular problem for bonding with certain types of adhesive or adhesive tape, or where a trim is clipped to a glazing profile, which relies on the clipping force together with friction and/or a mechanical interference fit to maintain the trim in place.

It is also important for the fixing means to take up little space which enables the flanges on the bodywork of the vehicle to be smaller both improving design freedom for the vehicle designer and enhancing visibility so that as little as possible of the visible area of the glazing is obscured by trim fixing components. Since such components (and the adhesive or other means by which the glazing is mounted) are usually behind an obscuration band, this would advantageously enable the width of the obscuration band to be reduced if desired.

The present invention accordingly provides, in a first aspect, a vehicle glazing to which a trim may be mounted, the vehicle glazing comprising a pane of glazing material having a glazing profile provided around at least a portion of the periphery of the pane, and a profile insert embedded in the glazing profile, wherein the profile insert is separate from the trim, and comprises a trim-retaining portion and the trim-retaining portion protrudes from the glazing profile, and wherein the trim-retaining portion extends from the edge of the pane and substantially in the plane of the pane.

Such a vehicle glazing is advantageous because it provides a firmly fixed trim-retaining part, difficult to remove in normal use, but provides such a part in a relatively small space. This has the great advantage of enabling a greater area of the glazing to be free of edge components and/or enabling a narrower obscuration band to be used, enhancing visibility through the glazing. The smaller size of the retaining component also increases the freedom of the car designer thereby allows greater flexibility in the design, e.g. by reducing the size and/or changing the shape of the bodywork mounting components and/or changing the design of the vehicle glazing. The trim-retaining portion according to this aspect may be used for many different shapes and types of vehicle glazing.

It is advantageous to provide the profile insert as a separate component from the trim, because this means that the trim can be fitted to the glazing profile at a later stage. This may be convenient from a logistical standpoint, and may also reduce the risk of damage to the trim, which after all is provided for decorative purposes. In particular, when the glazing profile is formed by edge encapsulation (i.e. injection moulding *in situ* on the glass), this means that the trim does not need to be placed in the injection mould.

The profile insert is usually embedded by means of a portion of the insert, so that the profile insert may comprise an embedded portion embedded in the glazing profile. An embedded portion advantageously provides a high pull-out force (reducing the chance that the insert is accidently or maliciously removed in use).

To increase the pull-out force further, the embedded portion may comprise at least one securing structure to secure the embedded portion in the glazing profile. The securing structure may, for example, comprise one or more projecting members and/or barbed structures, but preferably comprises at least one aperture. There may be one, two, three, four, five or more apertures. The apertures may be of any appropriate shape, e.g. rectangular, square, circular, or oval, etc. During injection moulding, the liquid polymer material flows through the apertures as well as around the embedded portion. After curing or setting, the embedded portion is consequently more securely anchored in the solid polymer of the encapsulation.

The trim-retaining portion extends substantially in the plane of the pane, for example, within an angle of 0° to 10° of the direction/plane of the pane surface.

Extending from the edge of the pane ensures a good use of space and, importantly, enables a straightforward engagement position for the trim that may be used for different styles and types of vehicle glazing and/or may accommodate similar glazings in different models of vehicles. This enables a reduction in the number of variants of vehicle glazings stored in, or delivered to, the factory thereby improving efficiency and so reducing cost of manufacture. Furthermore, manufacture of the vehicle glazing itself is simplified, reducing the need for different tools for variants of the same vehicle glazing part.

Preferably, the profile insert comprises an embedded portion, a connecting portion and the trim-retaining portion and is shaped such that the embedded portion is formed at an angle to the connecting portion and the connecting portion is formed at an angle to the trim-retaining portion. Thus, the profile insert may have a substantially step-like cross section. One or both of the angles may be a right-angle. These shapes are advantageous because they improve the use of space and enable good embedding and also easy mounting of the trim, in use. In particular, an insert comprising two right-angled bends may include an offset between the embedded portion and the trim-retaining portion, allowing the latter to be in the plane of the pane of glass with the embedded portion positioned to one side of the pane of glass, e.g. above or below the pane.

In order to reduce the chances of breakage in use, preferably the profile insert comprises at least one strengthening member. The, or a, strengthening member may comprise a strengthening rib and/or a strengthening bracket.

To provide good engagement with mounting parts on the trim, the trim-retaining portion will usually comprise at least one trim-retaining structure. Preferably the trim-retaining structure and, therefore, the trim-retaining portion comprises at least one trim-retaining aperture. The shape of the, or each, trim-retaining aperture may generally be as appropriate. Conveniently, the trim-retaining aperture may be a (trim-retaining) slot. The apertures are preferably defined within the protruding portion of the profile insert, i.e. the portion which protrudes from the glazing profile, and is not covered by the polymer material of the glazing profile. Often the protruding portion and trim-retaining portion are identical, depending on how much of the profile insert protrudes from the glazing profile.

Vehicle glazings as discussed above will preferably be manufactured by encapsulation, i.e. a glazing profile is injection moulded *in situ* on a pane of glass, at least part of the latter being positioned in the mould. Preferably the profile insert is embedded in the glazing profile during injection moulding.

Thus, in a second aspect, the present invention provides a method of manufacturing a vehicle glazing onto which a trim may be mounted, the method comprising, providing a pane of glazing material, providing a profile insert comprising a trim-retaining portion, encapsulating the pane of glazing material with a glazing profile around at least a portion of the periphery of the pane, wherein the profile insert is embedded in the glazing profile during encapsulation, the profile insert is separate from the trim, and wherein the trim-retaining portion protrudes from the encapsulated glazing profile, and extends from the edge of the pane and substantially in the plane of the pane.

Usually, encapsulating the pane will comprise placing the pane in a mould, injecting fluid polymer (usually liquid polymer) into the mould and solidifying the fluid polymer. The method will most often involve placing the pane in the injection mould with its edge protruding into the moulding cavity, and injecting the polymer in liquid form, so that the polymer flows into intimate contact with the glass before solidifying (i.e. setting or curing). The glazing profile is bonded to the glass as a consequence of being moulded in situ on the glass.

Preferably, encapsulating the pane further comprises placing the profile insert in the mould before injecting the fluid polymer. The insert is therefore embedded and anchored in the glazing profile during injection moulding. This is advantageous because it provides for consistent and precise manufacture, enabling tight tolerances to be achieved and also enables the same or similar profile inserts to be used in different types of glazing helping to reduce the numbers of tools needed in manufacture of the glazings. It also ensures that the insert is securely embedded in the glazing profile, and is therefore able to withstand high pull-out forces.

Vehicle glazings according to the first aspect may be used in cars or other vehicles that are to have trim mounted thereon.

Thus, in a further aspect the present invention provides a vehicle comprising a vehicle glazing as in the first aspect, having a trim mounted thereon.

In a still further aspect, the present invention provides a vehicle glazing to which a trim may be mounted, the vehicle glazing comprising a pane of glazing material having a glazing profile provided around at least a portion of the periphery of the pane, and a profile insert embedded in the glazing profile, wherein the profile insert comprises a trim-retaining portion and the trim-retaining portion protrudes from the profile.

The present invention will now be described by way of example only, and with reference to, the accompanying drawings, in which:
Figure 1 is a schematic plan view illustrating a vehicle glazing according to an embodiment of the invention, such as a rear quarter light.
Figure 2a is a schematic section corresponding to line A-A of Figure 1 showing part of a glazing according to an embodiment of the invention having a moulded glazing profile once installed in vehicle.
Figure 2b is a schematic section corresponding to line B-B of Figure 1 showing part of a glazing according to an embodiment of the invention having a moulded glazing profile once installed in a vehicle.
Figure 2c is a schematic section corresponding to line C-C of Figure 1 showing part of a glazing according to an embodiment of the invention having a moulded glazing profile and an insert once installed in a vehicle.
Figure 2d is a schematic section of the periphery of a glazing according to another embodiment of the invention mounted in a vehicle with a profile and insert showing components of a trim mounted thereon.
Figure 3 is a schematic section of the periphery of a glazing according to another embodiment of the invention generally as in Figure 2d but showing further components of the trim and omitting some other components.
Figure 4 is a schematic section of the periphery of a further embodiment of a glazing according to the invention with a profile and insert showing components of a trim mounted thereon.
Figures 5a and 5b are perspective views of a profile insert as illustrated in Figure 4.

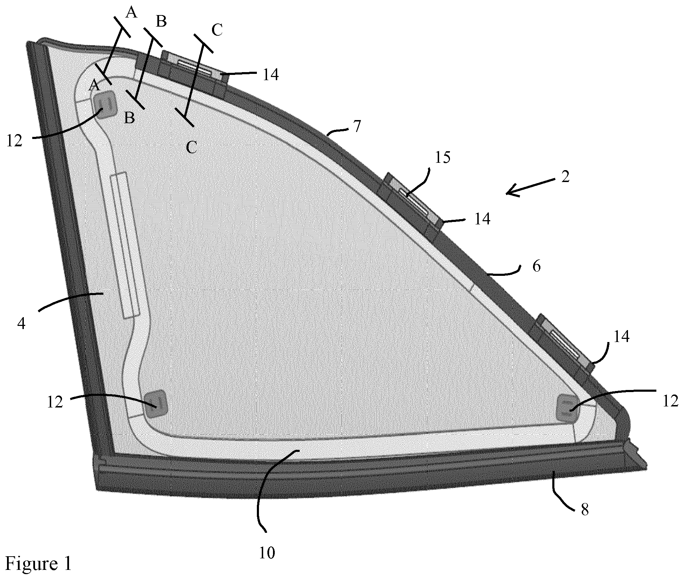

Referring to Figure 1, this shows a schematic plan view of a vehicle glazing in accordance with the invention, as viewed before installation in a vehicle but generally in the orientation that it would have once installed.

The glazing 2 is of generally triangular shape. The glazing 2 in Figure 1 is a rear quarterlight, but may be any automotive glazing as described below. The glazing 2 comprises a pane 4 of glazing material which is provided with an edge-encapsulated glazing profile 6 which extends around the periphery of the pane 4. In this example, the edge-encapsulated glazing profile 6 is provided around the entire periphery of the pane, but the form of the glazing profile 6 varies depending on the part of the periphery. Thus, the bottom glazing profile 8 along the bottom edge (in the orientation shown in the Figure and as would be when installed in a vehicle) is wider to provide an enhanced weather seal. The pane 4 may be composed of glass or a suitable transparent durable plastics material.

The glazing 2 would be installed by fitting it into an aperture in the bodywork of a vehicle (not shown), and retained in place by the adhesive 10 which extends around the periphery of the glazing 2 and is generally positioned just inside of the glazing profile 6 and is formed by extrusion before installation in a vehicle. The glazing profile 6 may have a dam portion (not shown) to control the spread of the adhesive 10 when compressed during installation. Locating clips 12 are provided near the three corners of the glazing 2 to aid in proper positioning during installation in a vehicle.

In the particular embodiment shown in Figure 1, the glazing 2 has trim mounting components along its long edge 7. The trim mounting components comprise three profile inserts 14 embedded in the glazing profile 6 during encapsulation of the glazing profile 2. Each profile insert 14 comprises an embedded portion (not shown in Figure 1) and a protruding portion (the portion visible in Figure 1) protruding from the glazing profile 2. The protruding portion of the profile inserts 14 has a trim retaining portion with a trim retaining slot 15 to engage and retain a trim (not shown in Figure 1) when mounted on the glazing 2.

The encapsulated glazing profile 6 may generally be formed of a resilient polymer material such as single or two-component polyurethanes, PUR, TPE (thermoplastic elastomer), PVC (polyvinyl chloride) or other thermoplastic material suitable for injection moulding processes. The encapsulated glazing profile 6 is adapted to form a seal with the body of a vehicle into which the vehicle glazing is fitted, and any trim used in conjunction with the profile insert 14 is adapted to engage with, and be retained by, the insert 14.

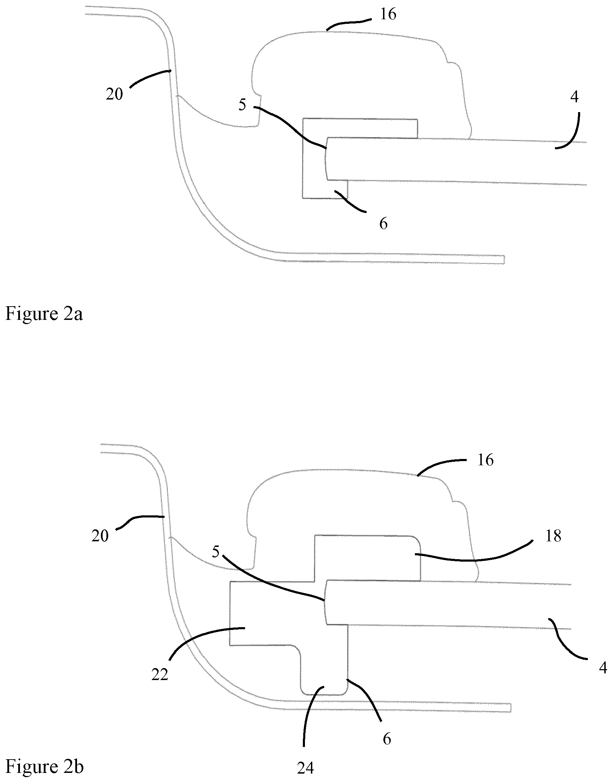

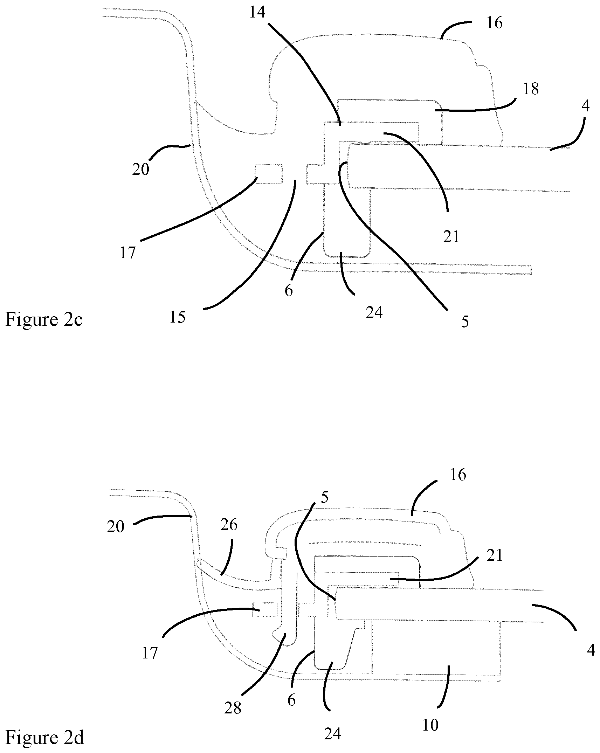

Figure 2a is a schematic section corresponding to line A-A of Figure 1 showing part of a glazing having a moulded glazing profile once installed in a vehicle. The glazing profile 6 on the periphery including the edge 5 of the pane 4 is of simple shape and, owing to the line of section, does not contain a profile insert (for which see Figure 2c). The periphery of the trim 16 is shown and the trim periphery extends from the bodywork flange 20 of the vehicle to the outer surface of the pane 4 (i.e. the face of the pane that is outside of the vehicle).

Figure 2b is a schematic section corresponding to line B-B of Figure 1 showing part of a glazing having a moulded glazing profile once installed in a vehicle. The glazing profile 6 on the periphery including the edge 5 of the pane 4 is of a different cross-sectional shape to that of Figure 2a having a wider profile outer face portion 18, a profile edge projecting portion 22 from the edge 5 of the pane 4 towards the bodywork flange 20 and a profile dam portion 24 which projects inward in the direction of the vehicle interior to abut, or nearly abut, the bodywork flange 20 and act as a dam to control the spread of adhesive (not shown) when the glazing 2 is installed and the adhesive is compressed against the bodywork flange 20. Again, the line of section B of Figure 2b does not pass through a profile insert.

Figure 2c is a schematic section corresponding to line C-C of Figure 1 showing part of a glazing once the glazing 2 is installed in the vehicle, having a moulded glazing profile and an insert. The glazing profile 6 on the periphery including the edge 5 of the pane 4 is of different cross-sectional shape to the shapes shown in Figure 2a and 2b, with a profile dam and spacer portion 24 and profile outer face portion 18. Embedded in the glazing profile 6 is a profile insert 14 having an embedded portion 21 which is embedded in the profile outer face portion 18 of the glazing profile 6. The profile insert also has a trim retaining portion 17 which protrudes from the glazing profile 6 and extends from the edge 5 of the pane 4 generally along the plane of the pane 4 towards the bodywork flange 20. The trim retaining portion 17 of the profile insert 14 thus protrudes beyond the outermost periphery of the glazing profile 6.

To aid in retaining and mounting the trim, the trim retaining portion 17 of the profile insert 14 has one or more apertures in the form of a trim retaining slot 15. The trim retaining slot 15 is easily accessible to corresponding projections on the trim 16, thus aiding straightforward mounting of the trim, because a portion of the profile insert 14 protrudes or projects from the glazing profile 6. Thus the trim retaining slots 15 are provided in the trim retaining portion 17 which protrudes from the glazing profile 6, which may also be referred to as the protruding portion.

Figure 2d is a schematic section of the periphery of a glazing generally similar to that shown in Figure 2c with a profile and insert showing components of a trim mounted thereon. The same reference numerals as in Figures 1 and 2a, 2b, and 2c are used to refer to corresponding parts. In addition to the parts shown in Figure 2c, Figure 2d also shows the adhesive 10 compressed between the inner face of the pane 4 and bodywork. The trim 16 has a trim seal portion 26 in the form of a lip abutting the bodywork flange 20 to provide weather protection and a trim fixing projection 28 which projects through, and is retained by, the trim retaining slot 15 in order to retain the trim 16. The trim fixing projection 28 has a barb portion facing away from the edge 5 of the pane 4 to better retain the trim 16 in the trim retaining slot 15. Thus it can be seen that the trim 16 is a separate element from the profile insert 14, the trim 16 engaging the insert and being retained by it as a result of the trim fixing projection 28 engaging in the trim retaining slot 15.

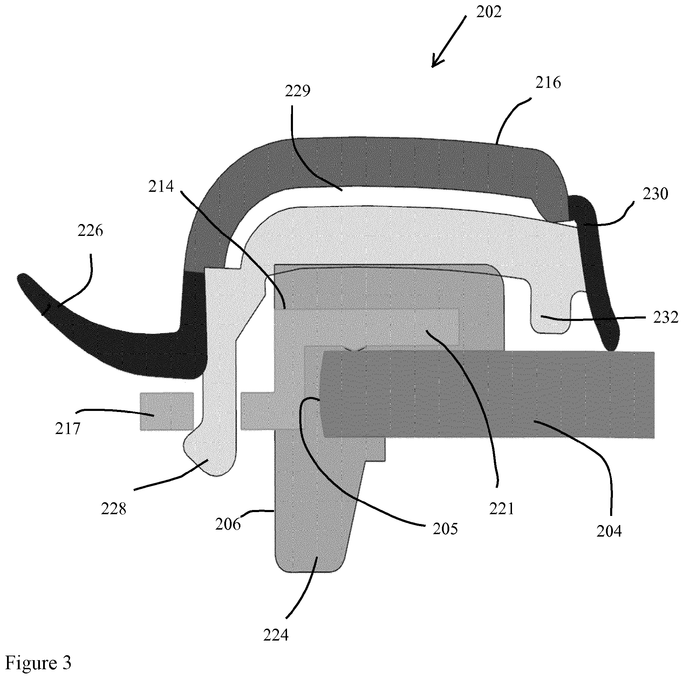

Figure 3 is a schematic section of the periphery of a glazing generally as in Figure 2d but showing further components of the trim and omitting some other components. The reference numerals of Figure 3 correspond to those of Figures 1 and 2 with the addition of 200, i.e. reference numeral 2 becomes 202. Thus, glazing 202 has a glazing profile 206 with a profile dam portion 224. Embedded in the glazing profile 206 is a profile insert 214 having an embedded portion 221 and a trim retaining portion 217 which protrudes from the glazing profile 206 and generally extends from the edge 205 of the pane 204. Defined within the trim retaining portion 217 are one or more trim retaining apertures 215. The trim 216 has a trim seal flange or lip portion 226 intended to abut the bodywork flange (not shown) to provide weather protection and a trim fixing projection 228 which is projected through and engages the slot in the trim retaining portion 217 in order to retain the trim 216. In Figure 3, the trim 216 is seen to comprise two parts, the fixing part having the trim fixing projection 228 and a trim pane abutment 232 which projects toward the surface of the pane 204 and may abut when the trim is pressed downward (in terms of the orientation of Figure 3) and a decorative part having the trim seal flange portion 226 and a trim seal pane portion 230 to abut the surface of the pane 204 and provide further weather protection. The two parts of the trim may be adhered together with adhesive tape 229.

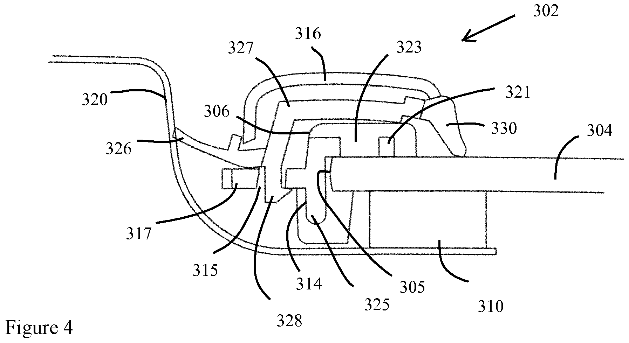

Figure 4 is a schematic section of the periphery of another embodiment of a glazing with a profile and insert showing components of a trim mounted thereon. The reference numerals of Figure 4 correspond to those of Figures 1 and 2 with the addition of 300 and the equivalent parts will not be discussed in detail. Glazing 302 has a profile 306 with a profile insert 314 embedded within the profile 306. The insert 314 has a trim retaining portion 317 having a trim retaining slot 315 for receiving a trim fixing projection 328 and thus engaging and retaining the trim 316. The trim fixing projection 328 has a barb portion facing toward the edge 305 of the pane 304 to better retain the trim 316 in the trim retaining slot 315. The section of Figure 4 shows that insert 314 has in its embedded portion 321 an insert embedded aperture 323 to better mechanically fix the insert in the profile when the material of the profile flows through and around the insert embedded aperture 323 and then sets during encapsulation. The insert 314 also has an insert strengthening rib 325 to strengthen the insert and reduce the chance of damage to the trim retaining portion 317 in use.

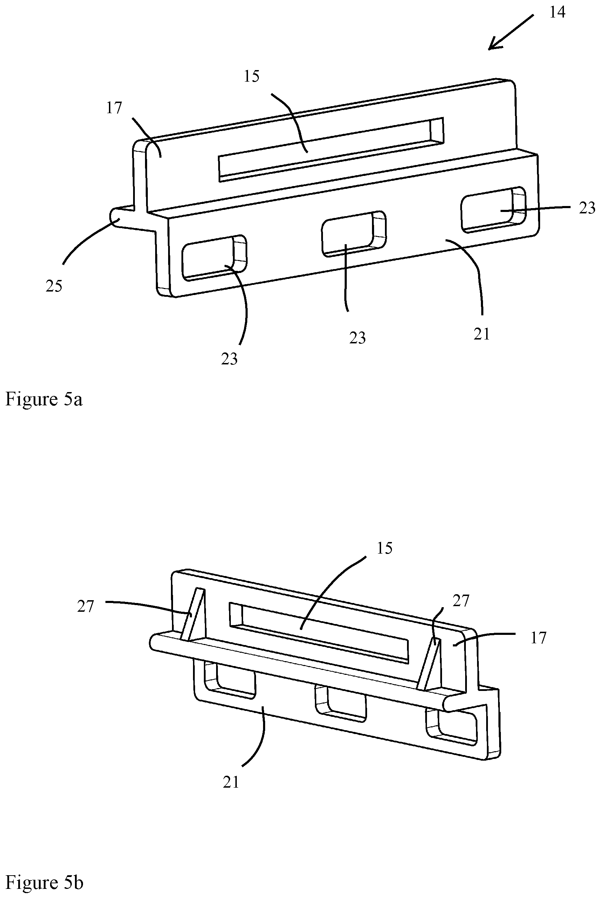

Figure 5a and 5b are perspective views of an insert 14 as in Figure 4. The insert 14 is of generally elongate shape having a double right angle, step-like, cross section with an embedded portion 21 (i.e. a portion that will be embedded in the glazing profile 6 in use) and a trim retaining portion 17 which, in use, is not embedded in the glazing profile 6 but projects/protrudes from the profile 6. The trim retaining portion 17 has a trim retaining slot 15 to receive a corresponding part on the trim 16 and thereby retain the trim 16. The trim retaining slot 15 may, of course, have other shapes (e.g. round, square, etc.) and fulfil the same function depending on the shape of the corresponding part on the trim. In the embedded portion 21 there are three insert embedded apertures 23 which improve the mechanical fixing of the insert 14 when embedded in the glazing profile 6 because the material of the profile flows through and around the insert embedded aperture 23 and then sets during encapsulation. The insert 14 has strengthening parts of an insert strengthening rib 25 generally perpendicular to both the embedded portion 21 and the trim retaining portion 17, and insert strengthening brackets 27 extending between the insert strengthening rib 25 and the trim retaining portion 17. The strengthening parts of the insert further increase the strength of the insert and hence aid in reducing breakage in use and thereby retaining the trim. Preferably, the insert 14 may be formed from a plastics material, such as ABS or polypropylene.

The trim described herein may be formed from one of a plastics material, such as polypropylene, or a metallic material, such as aluminium or stainless steel. So-called bright trims may also be formed from a plastics material with a film coating on the upper exposed surface, such as a chrome film.

A method of manufacturing a vehicle glazing as described above will now be set out briefly. First, a pane of glazing material, e.g. glass, of appropriate size and shape is provided and prepared (e.g. primed) in conventional manner. A profile insert as describe above is also provided. If the portion of the profile insert to be embedded in the glazing profile is to be in intimate contact with the glass, it may be attached to the glass by temporary adhesive or fixing means before the glass is placed in the injection mould. More usually, however, the glass and profile insert are placed in the mould separately, but in the appropriate relationship, with a conventional retaining means being employed to retain the profile insert in position in the mould while the polymer is injected.

After injection of liquid polymer material into the mould, the polymer is allowed to set or cure, depending on the polymer and process being used. The mould is then opened, the part is removed and checked, with any superfluous polymer material (generally known in the industry as "flash") removed. Although a trim may be mounted on the glazing profile for quality control purposes, or for convenience of delivery to the vehicle manufacturer (depending on where the trim is sourced from), final fitting of the trim may only occur after the glazing has been installed in the vehicle. In any case, the trim is only attached to the glazing profile (by means of the trim fixing projection and trim retaining slot, as described above) after the profile insert has been embedded in the glazing profile, preferably by encapsulation.

Although the example described in connection with the Figures above is in terms of a rear quarter side glazing, the present invention is suitable for use with any glazing intend for fitting in a vehicle, such as a windscreen, a backlight (rear window), a rooflight (roof window), a sidelight, a front quarter, vent or other glazing requiring a trim to be fitted by a vehicle manufacturer. The glazing material may be any material used in vehicle glazings, in particular, toughened glass or laminated glass, and the glass may be clear, tinted and/or coated.

## Claims

1. A vehicle glazing (2, 202, 302) to which a trim (16, 216, 316) may be mounted, the vehicle glazing comprising a pane (4, 204, 304) of glazing material having a glazing profile (6, 206, 306) provided around at least a portion of the periphery of the pane, and a profile insert (14, 214, 314 embedded in the glazing profile, wherein the profile insert is separate from the trim, and comprises a trim-retaining portion (17, 217, 317) which protrudes from the glazing profile, **characterised in that** the trim-retaining portion extends from the edge of the pane (4, 204, 304) and substantially in the plane of the pane.

2. A vehicle glazing as claimed in claim 1, wherein the profile insert (14, 214, 314) comprises an embedded portion (21, 221, 321) embedded in the glazing profile (6, 206, 306).

3. A vehicle glazing as claimed in claim 2, wherein the embedded portion (21, 221, 321) comprises at least one securing structure to secure the embedded portion in the glazing profile (6, 206, 306).

4. A vehicle glazing as claimed in claim 3, wherein the securing structure comprises at least one aperture (23, 323).

5. A vehicle glazing as claimed in any preceding claim, wherein the profile insert (14, 214, 314) comprises an embedded portion (21, 221, 321), a connecting portion and the trim-retaining portion (17, 217, 317) and is shaped such that the embedded portion is formed at an angle to the connecting portion and the connecting portion is formed at an angle to the trim-retaining portion.

6. A vehicle glazing as claimed in any one of the preceding claims, wherein the profile insert (14, 214, 314) has a step-like cross section.

7. A vehicle glazing as claimed in claim 5, wherein the profile insert (14, 214, 314) comprises two right-angled bends and includes an offset between the embedded portion (21, 221, 321) and the trim-retaining portion (17, 217, 317), allowing the latter to be in the plane of the pane of glass (4, 204, 304) with the embedded portion positioned to one side of the pane of glass, e.g. above or below the pane.

8. A vehicle glazing as claimed in any one of the preceding claims, wherein the glazing profile (6, 206, 316) is formed in situ on the glazing material by injection moulding, and the profile insert (14, 214, 314) is embedded in the glazing profile during injection moulding.

9. A vehicle glazing as claimed in any one of the preceding claims, wherein the trim-retaining portion (17, 217, 317) comprises at least one trim-retaining aperture.

10. A vehicle glazing as claimed in claim 9, wherein at least one trim-retaining aperture is a trim-retaining slot (15, 215, 315).

11. A vehicle comprising a vehicle glazing as claimed in any one of the preceding claims, having a separate trim (16, 216, 316) mounted thereon by means of a profile insert (14, 214, 314).

12. A method of manufacturing a vehicle glazing (2, 202, 302) onto which a trim (16, 216, 316) may be mounted, the method comprising providing a pane of glazing material (4, 204, 304), providing a profile insert (14, 214, 314)comprising a trim-retaining portion (17, 217, 317), encapsulating the pane of glazing material with a glazing profile (6, 206, 306)around at least a portion of the periphery of the pane, wherein the profile insert is embedded in the glazing profile during encapsulation, the profile insert is separate from the trim, and wherein the trim-retaining portion protrudes from the encapsulated glazing profile, **characterised in that** the trim-retaining portion extends from the edge of the pane (4, 204, 304) and substantially in the plane of the pane.

13. A method as claimed in claim 12, wherein encapsulating the pane (4. 204, 304) comprises placing the pane in a mould, injecting fluid polymer into the mould and solidifying the fluid polymer.

14. A method as claimed in either claim 12 or claim 13, wherein encapsulating the pane (4, 204, 304) further comprises placing the profile insert (14, 214, 314) in the mould before injecting the fluid polymer.

## Patentansprüche

1. Fahrzeugverglasung (2, 202, 302), an der eine Blende (16, 216, 316) angebracht werden kann, wobei die Fahrzeugverglasung eine Scheibe (4, 204, 304) aus Verglasungsmaterial, bei der ein Verglasungsprofil (6, 206, 306) um mindestens einen Teil des Umfangs der Scheibe herum vorgesehen ist, und einen in das Verglasungsprofil eingebetteten Profileinsatz (14, 214, 314) aufweist, wobei der Profileinsatz von der Blende getrennt ist und einen Blendenhalteabschnitt (17, 217, 317) aufweist, der aus dem Verglasungsprofil vorsteht, **dadurch gekennzeichnet, dass** sich der Blendenhalteabschnitt von der Kante der Scheibe (4, 204, 304) aus und im Wesentlichen in der Ebene der Scheibe erstreckt.

2. Fahrzeugverglasung nach Anspruch 1, bei der der Profileinsatz (14, 214, 314) einen in das Verglasungsprofil (6, 206, 306) eingebetteten Abschnitt (21, 221, 321) aufweist.

3. Fahrzeugverglasung nach Anspruch 2, bei der der eingebettete Teil (21, 221, 321) mindestens eine Befestigungsstruktur aufweist, um den eingebetteten Teil im Verglasungsprofil (6, 206, 306) zu befestigen.

4. Fahrzeugverglasung nach Anspruch 3, bei der die Befestigungsstruktur mindestens eine Öffnung (23, 323) aufweist.

5. Fahrzeugverglasung nach einem der vorhergehenden Ansprüche, bei der der Profileinsatz (14, 214, 314) einen eingebetteten Abschnitt (21, 221, 321), einen Verbindungsabschnitt und den Blendenhalteabschnitt (17, 217, 317) umfasst und so geformt ist, dass der eingebettete Abschnitt unter einem Winkel zum Verbindungsabschnitt und der Verbindungsabschnitt unter einem Winkel zum Blendenhalteabschnitt ausgebildet ist.

6. Fahrzeugverglasung nach einem der vorstehenden Ansprüche, bei der der Profileinsatz (14, 214, 314) einen stufenartigen Querschnitt aufweist.

7. Fahrzeugverglasung nach Anspruch 5, bei der der Profileinsatz (14, 214, 314) zwei rechtwinklige Biegungen aufweist und einen Versatz zwischen dem eingebetteten Abschnitt (21, 221, 321) und dem Blendenhalteabschnitt (17, 217, 317) aufweist, so dass letzterer in der Ebene der Glasscheibe (4, 204, 304) liegt, wobei der eingebettete Abschnitt auf einer Seite der Glasscheibe, z.B. oberhalb oder unterhalb der Scheibe, angeordnet ist.

8. Fahrzeugverglasung nach einem der vorstehenden Ansprüche, bei der das Verglasungsprofil (6, 206, 316) in situ auf dem Verglasungsmaterial durch Spritzgießen geformt ist und der Profileinsatz (14, 214, 314) während des Spritzgießens in das Verglasungsprofil eingebettet worden ist.

9. Fahrzeugverglasung nach einem der vorstehenden Ansprüche, bei der der Blendenhalteabschnitt (17, 217, 317) mindestens eine Blendenhalteöffnung aufweist.

10. Fahrzeugverglasung nach Anspruch 9, bei der mindestens eine Blendenhalteöffnung ein Blendenhalteschlitz (15, 215, 315) ist.

11. Fahrzeug mit einer Fahrzeugverglasung nach einem der vorhergehenden Ansprüche, auf der eine separate Blende (16, 216, 316) mit Hilfe eines Profileinsatzes (14, 214, 314) montiert ist.

12. Verfahren zur Herstellung einer Fahrzeugverglasung (2, 202, 302), auf die eine Blende (16, 216, 316) montiert werden kann, wobei das Verfahren umfasst: Bereitstellen einer Scheibe aus Verglasungsmaterial (4, 204, 304), Bereitstellen eines Profileinsatzes (14, 214, 314), der einen Blendenhalteabschnitt (17, 217, 317) umfasst, Einkapseln der Scheibe aus Verglasungsmaterial mit einem Verglasungsprofil (6, 206, 306) um wenigstens einen Teil des Umfangs der Scheibe herum, wobei der Profileinsatz während des Einkapselns in das Verglasungsprofil eingebettet wird, der Profileinsatz von der Blende getrennt ist, und wobei der Blendenhalteabschnitt aus dem eingekapselten Verglasungsprofil vorsteht, **dadurch gekennzeichnet, dass** sich der Blendenhalteabschnitt von der Kante der Scheibe (4, 204, 304) aus und im Wesentlichen in der Ebene der Scheibe erstreckt.

13. Verfahren nach Anspruch 12, bei dem das Einkapseln der Scheibe (4, 204, 304) das Einlegen der Scheibe in eine Form, das Einspritzen von flüssigem Polymer in die Form und das Verfestigen des flüssigen Polymers umfasst.

14. Verfahren nach Anspruch 12 oder 13, bei dem das Einkapseln der Scheibe (4, 204, 304) ferner das Einlegen des Profileinsatzes (14, 214, 314) in die Form vor dem Einspritzen des flüssigen Polymers umfasst.

## Revendications

1. Vitrage de véhicule (2, 202, 302) sur lequel une garniture (16, 216, 316) peut être montée, le vitrage de véhicule comprend une vitre (4, 204, 304) de matériau de vitrage ayant un profilé de vitrage (6, 206, 306) prévu autour d'au moins une partie de la périphérie de la vitre, et un insert de profilé (14, 214, 314) encastré dans le profilé de vitrage, dans lequel l'insert de profilé est séparé de la garniture, et comprend une partie de retenue de garniture (17, 217, 317) qui fait saillie du profilé de vitrage, **caractérisé en ce que** la partie de retenue de garniture s'étend à partir du bord de la vitre (4, 204, 304) et sensiblement dans le plan de la vitre.

2. Vitrage de véhicule selon la revendication 1, dans lequel l'insert de profilé (14, 214, 314) comprend une partie encastrée (21, 221, 321) encastrée dans le profilé de vitrage (6, 206, 306).

3. Vitrage de véhicule selon la revendication 2, dans lequel la partie encastrée (21, 221, 321) comprend au moins une structure de fixation pour fixer la partie encastrée dans le profilé de vitrage (6, 206, 306).

4. Vitrage de véhicule selon la revendication 3, dans lequel la structure de fixation comprend au moins une ouverture (23, 323).

5. Vitrage de véhicule selon l'une quelconque des revendications précédentes, dans lequel l'insert de profilé (14, 214, 314) comprend une partie encastrée (21, 221, 321), une partie de raccordement et la partie de retenue de garniture (17, 217, 317) et est formé de sorte que la partie encastrée est formée à un angle par rapport à la partie de raccordement et la partie de raccordement est formée à un angle par rapport à la partie de retenue de garniture.

6. Vitrage de véhicule selon l'une quelconque des revendications précédentes, dans lequel l'insert de profilé (14, 214, 314) a une section transversale en forme de gradin.

7. Vitrage de véhicule selon la revendication 5, dans lequel l'insert de profilé (14, 214, 314) comprend deux coudes coudés à droite et comprend un décalage entre la partie encastrée (21, 221, 321) et la partie de retenue de garniture (17, 217, 317), permettant à cette dernière d'être dans le plan de la vitre de verre (4, 204, 304) avec la partie encastrée positionnée d'un côté de la vitre de verre, par exemple au-dessus ou au-dessous de la vitre.

8. Vitrage de véhicule selon l'une quelconque des revendications précédentes, dans lequel le profilé de vitrage (6, 206, 316) est formé in-situ sur le matériau de vitrage par moulage par injection, et l'insert de profilé (14, 214, 314) est encastré dans le profilé de vitrage pendant le moulage par injection.

9. Vitrage de véhicule selon l'une quelconque des revendications précédentes, dans lequel la partie de retenue de garniture (17, 217, 317) comprend au moins une ouverture de retenue de garniture.

10. Vitrage de véhicule selon la revendication 9, dans lequel au moins une ouverture de retenue de garniture est une fente de retenue de garniture (15, 215, 315).

11. Véhicule comprenant un vitrage de véhicule selon l'une quelconque des revendications précédentes, ayant une garniture séparée (16, 216, 316) montée sur ce dernier au moyen d'un insert de profilé (14, 214, 314).

12. Procédé pour fabriquer un vitrage de véhicule (2, 202, 302) sur lequel une garniture (16, 216, 316) peut être montée, le procédé comprenant l'étape pour prévoir une vitre de matériau de vitrage (4, 204, 304), l'étape pour prévoir un insert de profilé (14, 214, 314) comprenant une partie de retenue de garniture (17, 217, 317), l'étape pour encapsuler la vitre de matériau de vitrage avec un profilé de vitrage (6, 206, 306) autour d'au moins un partie de la périphérie de la vitre, dans lequel l'insert de profilé est encastré dans le profilé de vitrage pendant l'encapsulation, l'insert de profilé est séparé de la garniture, et dans lequel la partie de retenue de garniture fait saillie du profilé de vitrage encapsulé, **caractérisé en ce que** la partie de retenue de garniture s'étend à partir du bord de la vitre (4, 204, 304) et sensiblement dans le plan de la vitre.

13. Procédé selon la revendication 12, dans lequel l'étape pour encapsuler la vitre (4, 204, 304) comprend les étapes pour placer la vitre dans un moule, injecter du polymère fluide dans le moule et solidifier le polymère fluide.

14. Procédé selon la revendication 12 ou la revendication 13, dans lequel l'étape pour encapsuler la vitre (4, 204, 304) comprend en outre l'étape pour placer l'insert de profilé (14, 214, 314) dans le moule avant d'injecter le polymère fluide.
